**Europäisches Patentamt**

(19) **European Patent Office**

**Office européen des brevets**

(11) Publication number : **0 492 891 A1**

(12) **EUROPEAN PATENT APPLICATION**

(21) Application number : **91311499.7**

(22) Date of filing : **11.12.91**

(51) Int. Cl.⁵ : **B26D 7/24,** F16P 3/16, B23Q 11/04, C14B 5/00

(30) Priority : **13.12.90 GB 9027066**

(43) Date of publication of application :
**01.07.92 Bulletin 92/27**

(84) Designated Contracting States :
**DE DK ES FR GB IT**

(71) Applicant : **DVSG ENGINEERING UND PATENTVERWALTUNGS GmbH**
**Westerbachstrasse 47**
**W-6000 Frankfurt am Main 1 (DE)**
(84) **DK FR IT**

(71) Applicant : **DEUTSCHE VEREINIGTE SCHUHMASCHINEN GmbH**
**Postfach 94 01 66 Westerbachstrasse 47**
**W-6000 Frankfurt/Main-94 (DE)**
(84) **DE**

(71) Applicant : **USM ESPANA, S.A.**
**Apartado 3174 Berenguer de Palou, 64**
**E-08027 Barcelona (ES)**
(84) **ES**

(71) Applicant : **SAMCO-STRONG LIMITED**
**P.O. Box 129 Ross Walk**
**Belgrave Leicester LE4 5BY (GB)**
(84) **GB**

(72) Inventor : **Berny, Hans-Jürgen**
**Laerchenweg 11**
**W-6056 Heusenstamm 2 (DE)**
Inventor : **Bergstrasser, Werner**
**Pestalossistrasse 10**
**W-6074 Rodermark (DE)**
Inventor : **Rohlander, Emil**
**Im Bubenhain 14**
**W-6236 Eschborn (DE)**

(74) Representative : **Atkinson, Eric**
**c/o British United Shoe Machinery Limited**
**P.O. Box 88 Ross Walk Belgrave**
**Leicester LE4 5BX (GB)**

(54) **Cutting press.**

(57) In a cutting press in which the cutting head (38) moves under power to a cutting position (e.g. swing beam press, receding head press, travelling head press) the power applied to effect such movement is regulated such that it cannot exceed a pre-set value even if such movement is arrested or otherwise prevented, while nevertheless being sufficient to allow the movement to continue under control in the absence of any such obstruction. In one embodiment a d.c. motor (48) is used to effect such movement, the current supply to said motor being monitored by electronic control means so as to ensure that the actual current supplied is maintained at a pre-set constant. In addition a compressible sensor pad arrangement (60) is provided on each side of the cutting head (28) a contact surface of which is spaced from the side of the head by a distance such that the force applied by the head to an obstruction as it moves does not exceed 50 Newtons by the time such distance has been traversed by the head with corresponding compression of the pad arrangement (60).

EP 0 492 891 A1

$Fig\_1$

This invention is concerned with a cutting press comprising a cutting bed, a cutting head movable between an operative position, in which it is in opposed relationship with the cutting bed, and an out-of-the-way position, first drive means for effecting movement of the cutting head between its operative and out-of-the-way positions, and second drive means for effecting relative movement of approach between the cutting bed and cutting head, thus to effect a cutting stroke of the press. The invention is thus applicable to so-called multi-pillar cutting presses, e.g. so-called "travelling head" cutting presses and also so-called "receding platen" cutting presses, but is particularly, but not exclusively, concerned with so-called swing beam cutting presses wherein the cutting head is constituted by a swing beam mounted for swinging movement between an operative position and an out-of-the-way position under the action of the first drive means; swing beam cutting presses of the aforementioned type are usually referred to as being provided with "powered swing".

Receding platen and travelling head cutting presses and swing beam presses having powered swing generally require guarding in order to prevent a party other than the operator from having access to the area in which the cutting head or swing beam, as the case may be, moves under the action of the first drive means, and in addition require some form of actuator arrangement whereby the hands of the operator must be outside the region of such movement. In this way the risk of damage to the operator or any third party is avoided.

The main reason why the risk of such damage arises is essentially because the force applied by the first drive means is relatively high, in order to ensure that the cutting head (or swing beam) moves to its operative position in an economically short time. Furthermore, because of the provision of guarding and ensuring that the operator's hands are out of the way, no control over the applied force, other than its initial regulation, need be effected.

The provision of guarding is of course expensive and may well interfere with other aspects of press cutting, in particular with material feed, and in addition the requirement that both hands of the operator are out of the region of movement of the cutting head (or swing beam) is not necessarily ergonomically or economically desirable and indeed may require greater physical exertion from the operator than would otherwise be the case and may also be time-consuming.

It is thus one of the various objects of the present invention to provide an improved cutting press wherein the facility is provided for dispensing with the need for guarding around the area of movement of the cutting head and with the requirement that the operator's hands are outside said area during the movement of the cutting head.

With the first of these objects in mind the invention provides a cutting press as set out in Claim 1 below. Such a press may be of any of the aforementioned types, e.g. a travelling head cutting press or swing beam press. It will be appreciated that by monitoring the force with which the cutting head moves, or the turning moment of the swing beam, as the case may be, and by limiting it to a pre-set value which is not exceeded, the facility is thus provided for ensuring that the cutting head or swing beam, as the case may be, is moved under a sufficiently light force, or with a sufficiently low turning moment, that damage to the operator or to a third party can in fact be avoided, thereby militating against the need to provide guarding or indeed to maintain the operator's hands in an out-of-the-way position during such movement.

The first drive means preferably comprises an electric motor drive arrangement the force applied by which to the cutting head is proportional to the current supplied to it. One such drive arrangement conveniently comprises a d.c. electric motor. It will be appreciated that the current supplied to such motor is generally directly proportional to the force with which the cutting head moves or the turning moment of the swing beam, as the case may be, and consequently in such preferred embodiment the electronic control means monitors the current supplied to said motor and limits it in accordance with said pre-set value or value(s).

In order to achieve a desired level of safety it has been found desirable to ensure that the force which the cutting head or swing beam, as the case may be, would apply to an obstruction, e.g. the hands or head of a third party, does not exceed 50 Newtons. In the case of a swing beam cutting press, furthermore, said force desirably does not exceed 50 Newtons over the whole of the length of the beam. To this end preferably brake means is provided effective to discontinue movement of the cutting head or swing beam, as the case may be, the arrangement being such that sensor means is provided on each side of the cutting head or swing beam, as the case may be, for sensing contact therewith and for causing the brake means to be applied in response to such contact being sensed, a contact surface of said sensor being spaced from the side of the cutting head or swing beam, as the case may be, by such a distance and the pre-set value to which the applied force is limited by the electronic control means being such that the force applied by the cutting head or swing beam, as the case may be, after said distance has been traversed, to an obstruction which is placed in the path and contact with which has been sensed as aforesaid does not exceed 50 Newtons.

Preferably, furthermore, the sensor means is also effective, upon contact being sensed as aforesaid, to disable the second drive means and thus prevent a cutting stroke of the press from being effected.

It will of course be appreciated that it is necessary to overcome inertia at the start of the operation of the first drive means and thus preferably in the operation of the first drive means initially, for a period not exceeding 0.5 seconds, relatively high power is applied, limited in accordance with an initial pre-set value for the force with which the cutting head moves, or for the turning moment of the swing beam, as the case may be, whereby to initiate such movement, and thereafter the applied power is reduced, limited in accordance with the first-mentioned pre-set value for said force or turning moment, as the case may be.

As has previously been mentioned, it is conventional in cutting presses to provide an operator-actuatable switch arrangement for causing swinging movement of the swing beam to take place selectively in one or an opposite direction, said arrangement comprising a plurality of switches mounted in a handle on the cutting head so as to be accessible to the thumb or a finger of a hand gripping the handle, operation of one of which switches causes movement of the cutting head to take place in one direction and operation of another of which switches causes such swinging movement to take place in the opposite direction. Such an arrangement, moreover, may form part of an operator-actuatable two-hand trip arrangement for controlling the operation of the second drive means in order to ensure that the operator's hands are out of the operating locality during a cutting stroke. In presses in accordance with the present invention, furthermore, conveniently the operator-actuatable two-hand trip arrangement also comprises at least one further button actuation of which at the same time as actuation of any one of said plurality of switches is effective to initiate a cutting stroke of the press. In certain cases, notably where the cutting stroke does not exceed 8mms, on the other hand, it is also possible to utilise a single-hand trip arrangement. In such a case said plurality of switches constitutes a single-hand trip arrangement for controlling the operation of the second drive means, the arrangement being such that if, after actuation of one of said switches further actuation of the same or another switch is effected within a pre-set time period, operation of the second drive means is effected to initiate a cutting stroke of the press, but if such further actuation is effected outside said pre-set time period a further movement of the cutting head is then effected.

It will of course be appreciated that where the cutting head is moved away from its operative position sufficiently to clear the surface of the cutting bed, it would be most inconvenient for the operator wishing to return the cutting head to or towards its operative position to have to use the operator-actuatable switch arrangement which is mounted in the handle on the swing beam itself. In order to provide more accessible means for effecting the return of the cutting head towards the operative position, two further buttons are provided, one at each side of the cutting head, each such button forming part of the operator-actuatable two-hand trip arrangement, and each such button being also effective, when operated alone, to cause movement of the cutting head to take place, in one direction in response to actuation of one of said buttons and in the opposite direction in response to actuation of the other. Conveniently, moreover, operation of either button is effective to move the cutting head through a pre-set distance only. In this way the cutting head can be returned in a direction towards its operative position such that the handle becomes again accessible to the operator.

It will be appreciated that by each arrangement of buttons as described above a compact combined switch arrangement and trip arrangement is achieved which, by reason of the dual function of the switches and (in the case of the two-hand trip arrangement) buttons, is rendered less expensive than would otherwise be the case while at the same time, because of the reduction of numbers of switches and buttons, those which are provided can be positioned in an optimum manner from an ergonomic point of view.

Swing beam presses customarily are provided with a column upon which the swing beam is fixedly mounted and which extends through bearings in the frame of the press below the level of the cutting bed, the swing beam thus being mounted for pivotal movement about the axis of the column and also for heightwise movement relative to the bed. In cutting presses having powered swing, furthermore, it has been proposed operatively to connect the lower end of such column to suitable drive means for effecting rotation of the column and thus swinging movement under power of the swing beam.

In one embodiment of the invention, the cutting head is constituted by a swing beam mounted for swinging movement on a column fixed to the cutting bed, the second drive means comprising a piston-and-cylinder arrangement incorporated in said column and having an upwardly projecting piston rod to an upper end of which is secured a first gear forming part of the first drive means. For providing powered swing in the case of such a construction of press, furthermore, preferably the motor of the first drive means is mounted on the swing beam and drives a second gear held in mesh with said first gear whereby operation of said motor is effective to cause the second gear and thus the motor to move around the circumference of the first gear and thus to cause swinging movement of the swing beam to take place about the column. In this way, it will be appreciated, a simple, compact and effective drive arrangement is provided for swinging the swing beam.

There now follows a detailed description, to be read with reference to the accompanying drawings, of one swing beam press in accordance with the invention. It will of course be appreciated that this press has been selected for description merely to illustrate the invention by way of non-limiting example.

In the accompanying drawings:-

Figure 1 is a side view, with parts broken away, of the cutting press which is now to be described;

Figure 2 is a fragmentary view taken along the arrow II of Figure 1, and showing details of an operator-actuatable switch arrangement of the press;

Figure 3 is a fragmentary view of a sensor pad mounted on the side of a swing beam of the press shown in Figure 1;

Figures 4A, 4B and 4C together constitute a flow diagram showing a control circuit for the various operating switches of the cutting press shown in Figure 1; and

Figure 5 is a flowchart showing details of the control of the powered swing of the cutting press of Figure 1.

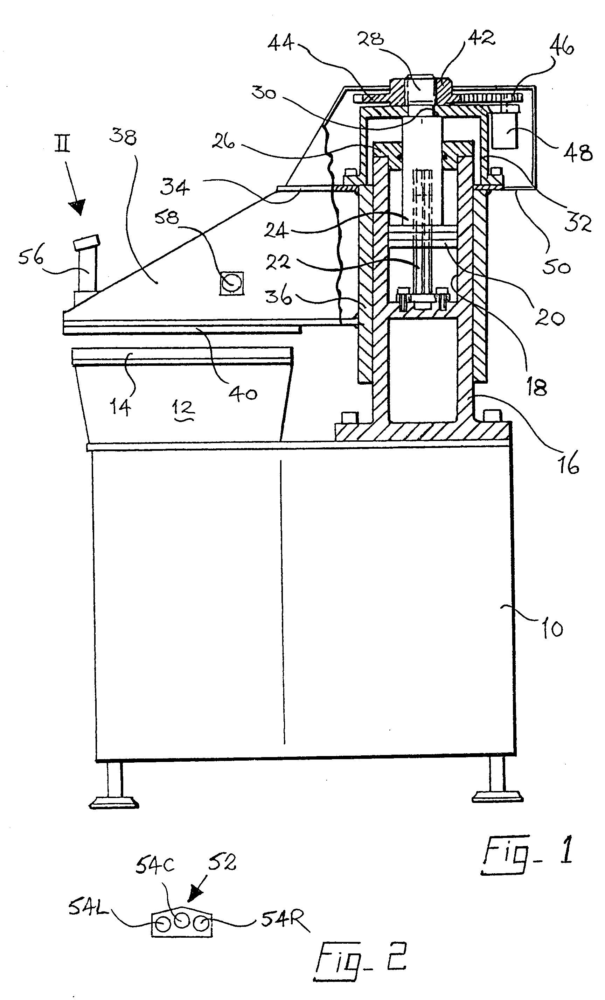

The cutting press shown in Figure 1 is a swing beam cutting press comprising a base 10 which supports a cutting table or bed 12, a cutting surface of which is provided by a cutting pad 14 supported on the bed. Secured on the base 10, rearwardly of the cutting bed 12, is an upstanding column 16 which is hollow and the upper end of which constitutes a cylinder 18 forming part of a hydraulic piston-and-cylinder arrangement the piston 20 of which is mounted for heightwise sliding movement in the cylinder when hydraulic fluid is applied thereto. The piston is secured against rotation in the cylinder by means of a splined shaft 22 fixedly secured to the base of the cylinder and projecting through, and mating with, a complementarily shaped bore in the piston. The piston carries an upwardly extending piston rod 24 which projects through an end cap 26 of the cylinder 18 and has at its upper end a portion of reduced diameter 28, thus providing an annular support surface 30 on which a housing 32 is carried. The housing 32 is bolted to a plate 34 which in turn is welded to a sleeve 36 slidable heightwise on the outside of the column 16. The plate 34 also constitutes the top plate of a swing beam 38 which is also welded or otherwise secured to the sleeve 36. The swing beam 38 carries a striker plate 40 on its underside. It will thus be appreciated that upon admission of hydraulic fluid to the lower end of the cylinder 18, the piston rod is moved upwardly lifting the housing 32, sleeve 36 and swing beam 38 upwards, thus to move the swing beam to a rest condition, while admission of fluid under pressure to the upper end of the cylinder 18 is effective to cause a cutting stroke to take place.

The reduced diameter portion 28 of the piston rod 24 is threaded and threadedly receives a nut 42 which is formed integral with a gear 44. Meshing with the gear 44 is further gear 46 carried on a drive shaft of a d.c. motor 48 mounted on the outside of the housing 32. The plate 34 carries a cover 50 which shrouds the gears 44, 46, the housing 32 and motor 48. Upon the supply of drive signals to the d.c. motor 48 causing rotation of the gear 46 to take place, the gear 46 thus runs around the circumference of the gear 44 fixed on the piston rod 24, thereby moving the housing 32 and thus the swing beam 38 about the axis provided by the piston rod.

For controlling operation of the motor 48 (constituting first drive means of the press) and also the supply of hydraulic fluid to the cylinder 18 (constituting, with its piston 20, second drive means of the press), first a switch arrangement generally designated 52 (Figure 2), comprising three switches 54, is provided mounted in a handle 56 on the swing beam 38, together with an actuator arrangement comprising two buttons 58 arranged one at each side of the swing beam 38. These two arrangements are so interconnected that:

– Actuation of either one of the buttons 58 alone will be effective to cause motor 48 to be actuated for a pre-set time period to drive the swing beam 38 through a limited distance in a direction towards the hand operating the button;

– Actuation of the left-hand switch 54L or the right-hand switch 54R alone is effective to cause the motor 48 to move the swing beam 38 respectively to the left or to the right, such movement continuing while the switch remains actuated (up to a stop (not shown)).

– Operation, when a single-hand trip mode has been selected, of either one of the switches 54R, 54L within a pre-set time period (in the press now being described 500 milli-seconds) following release thereof after its operation to cause swinging movement to be effected as aforesaid, will cause motor 18, 20 to operate to effect a cutting stroke of the press;

– Operation of one of the switches 54 simultaneously with one of the buttons 58, when a two-hand trip mode has been selected, will cause a cutting stroke of the press to be effected, i.e. by operation of the motor 18, 20.

It should also be noted that, in a manner which is already known, the depth of penetration of a cutting die, i.e. the depth to which a cutting die is driven through material, which is supported on the cutting pad 14 and over which the cutting die is then placed, into the cutting pad 14 can be selectively varied according to which one of the three switches 54 is selected for actuation. For varying the depth of penetration the distance through which the beam is moved downwardly may be varied according to the particular switch selected. Alternatively, to the same end the time during which the cutting pressure is maintained or the applied pressure may be varied according to the switch selected.

In the press now being described an air brake (not shown) is provided by which swinging movement of the swing beam is arrested either at the end of the movement through a limited distance (following actuation of one of the buttons 58) or when the switch 54L (or 54R) ceases to be actuated. In order to enhance the safety of the press, while still dispensing with the need for guards, provision must also be made for ensuring that the force applied by any part of the swing beam to an obstruction in its path as it swings does not exceed an acceptable value, in this case 50 Newtons.

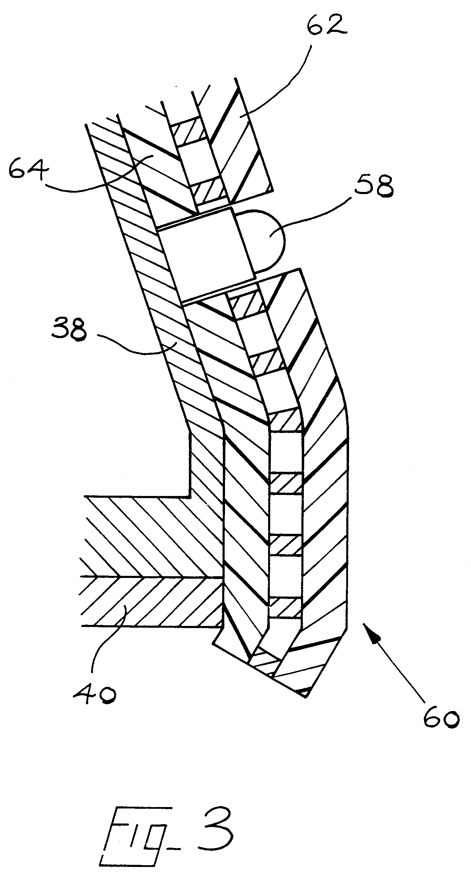

To this end, there is mounted on each side of the swing beam a sensor pad arrangement 60 (see Figure 3) comprising two pads 62, 64 of synthetic foam material held separated by spaced-apart ribs 66 also of a compressible material. The pads 62, 64 are electrically conductive and the ribs insulating, the arrangement being such that compression brings the pads into contact and in response thereto a signal can be supplied. A pad arrangement of this type is available from MAYSER GmbH & Co, of Ulm, Germany, and is identified as an Electronic Safety System. In the press in accordance with the invention now being described the pad arrangements 60 covers the whole of each side of the swing beam, each with a cut-out for its associated button 58, and also wraps around the lower edge of the beam. Each pad arrangement is 30 mms thick, allowing some 20 mms of movement of the swing beam after initial contact with an obstruction before it becomes "solid" with the swing beam.

During this 20 mms of movement the force applied by the beam to the obstruction must be reduced to 50 Newtons (if it is previously in excess of 50 Newtons) and in any event must not exceed 50 Newtons after the pad arrangement becomes solid with the swing beam. The press thus further comprises a second brake system which is actuated in response to contact being made between the pads 62, 64 and serves to discontinue the current supply to the motor 48 driving the swing beam in the selected direction and indeed to reverse the current supply so as to initiate the driving of the beam for a short time period in the opposite direction.

It will thus be appreciated that the current supply to the motor 48 must at all time be so regulated that the aforementioned conditions are achieved whereby the force of any impact of the swing beam on an obstruction in its path as it swings does not exceed 50 Newtons.

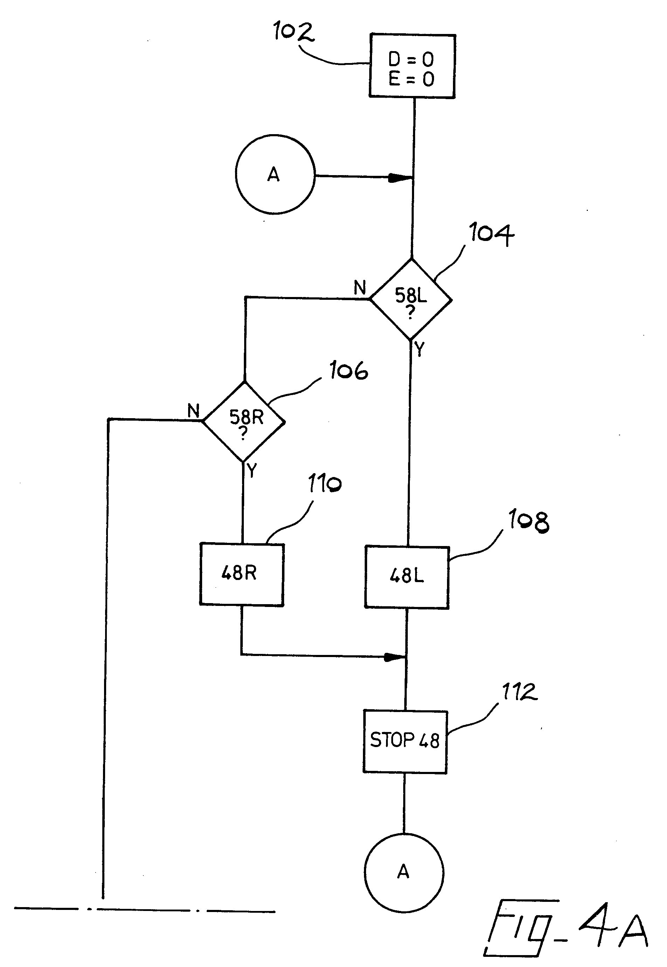

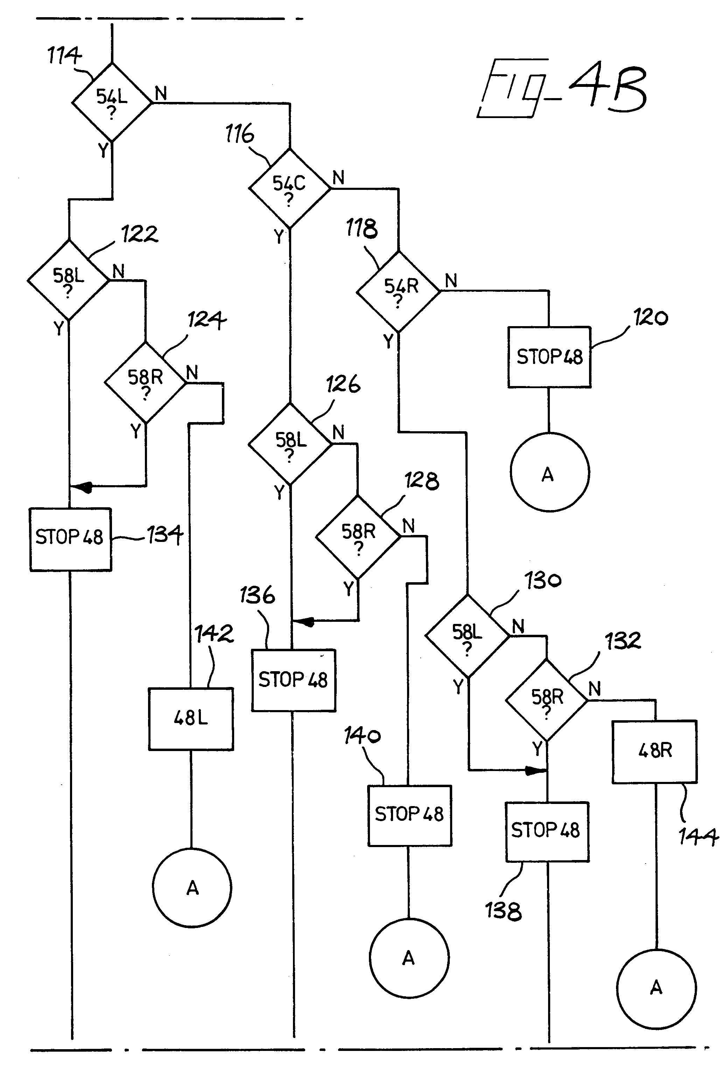

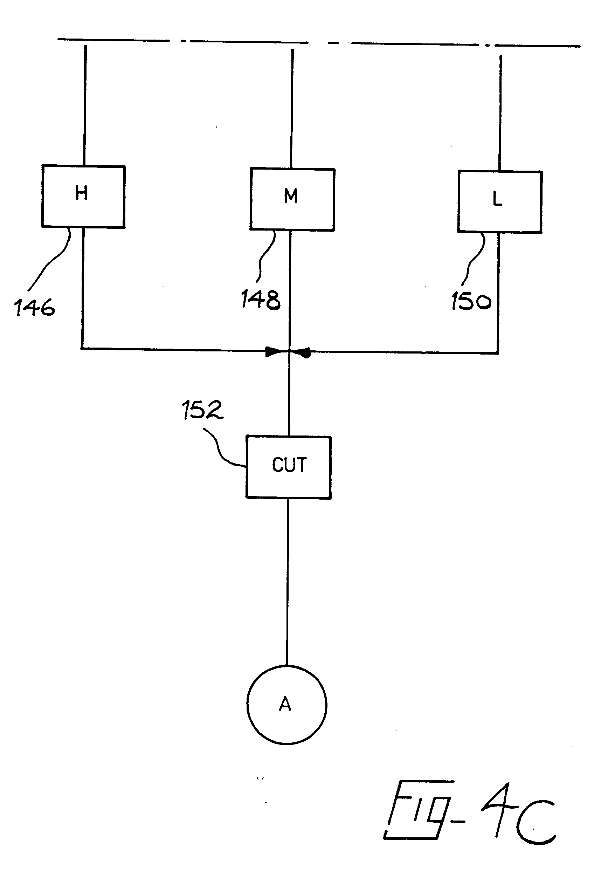

There now follows a description, with reference to Figure 4, of the function of the electronic control means for controlling the operation of the switch arrangement 52 and the actuator arrangement comprising the buttons 58, when a two-hand trip mode of operation has been selected.

Starting at step 102 (Figure 3A) firstly two flags D and E are initialised to a value zero. At steps 104 and 106 in sequence the status of buttons 58L and 58R is monitored and in the event that either is actuated motor 48 is operated to drive the swing beam to the left (step 108) or right (step 110) through a limited distance as aforesaid, whereafter such movement is terminated (step 112). The circuit then returns via junction A to step 104. In the event that neither button 58 is actuated, the circuit then passes to steps 114, 116 and 118 at which respectively the actuation of the three switches 54 is monitored. In the event that none of these switches is actuated, the operation of motor 48 is signalled to be discontinued (step 120) and the circuit then returns via junction A to step 104. In the event that any one of the three switches 54 is operated, then the circuit interrogates successively the buttons 58 (steps 122, 124; 126, 128; 130, 132). In the event that either one of the buttons 58 is actuated simultaneously with one of the switches 54, the operation of motor 48 is signalled to be discontinued (steps 134; 136; 138). Moreover, as a purely safety measure, actuation of switch 54C (step 126) without simultaneous actuation of either one of buttons 58 (126, 128) also causes the operation of motor 48 to be discontinued (step 140). In this latter case, furthermore, the circuit then returns via junction A to step 104.

In the event that one of switches 54L, 54R is actuated without the simultaneous actuation of one of the buttons 58, then the operation of motor 48 is initiated respectively to the left (step 142) or to the right (step 144), thus to cause the swing beam to move under power in the appropriate direction. Thereafter, the circuit returns via junction A to step 104. Operation of the motor 48, furthermore, continues while the actuated switch 54 remains actuated. Release of said actuated switch causes the operation of the motor 48 to be discontinued (step 120).

In the event that one of the buttons 58 is actuated simultaneously with one of the switches 54, then according to the switch 54 selected the depth of penetration of the cutting die into the cutting pad is selected (steps 146; 148; 150). Thereafter a cutting programme is executed (step 152). This is a conventional cutting programme and is not described in detail herein, but it should be noted that such a programme will require the actuation of one of the switches 54 simultaneously with one of the buttons 58 throughout the cutting stroke. At the end of the cutting programme the beam will be returned to its raised position, whereafter the beam can be moved transversely to an out-of-the-way position. This transverse movement may be effected automatically, e.g. under timer control (which may be adjustable in order to set the distance moved away), or under the control of the operator using one of the switches 54L, 54R. Alternatively additional "return" switches or buttons may be provided e.g. on opposite sides of the swing beam for moving the latter to the right or to the left according to which of the such "return" switches is actuated by the operator.

The motor 48 is a d.c. motor; thus the torque, or turning moment, generated is proportional to the current supplied to it. In order to control the turning moment of the swing beam, therefore, it is merely necessary to control the supply of current, it being of course appreciated that in the normal operation of a d.c. motor, the current will rise as the load, and thus the turning moment to overcome such load, rises. Apart from an initial period of not more than 500 milli-seconds at the start of the movement of the beam under the action of the motor 48, during which period the inertia of the stationary beam has to be overcome, therefore, the current supply to the motor 48 is constantly monitored and limited to a pre-set value such that the force which the beam applies to any obstruction, e.g. the hand of an operator or third party, does not exceed 50 Newtons by the time the pad arrangement 60 has been compressed and the pads 62, 64 have become solid with the swing beam. It is of course to be appreciated that this force will vary along the length of the beam from its pivot, and the limit of 50 Newtons applies throughout the whole of the length of the beam.

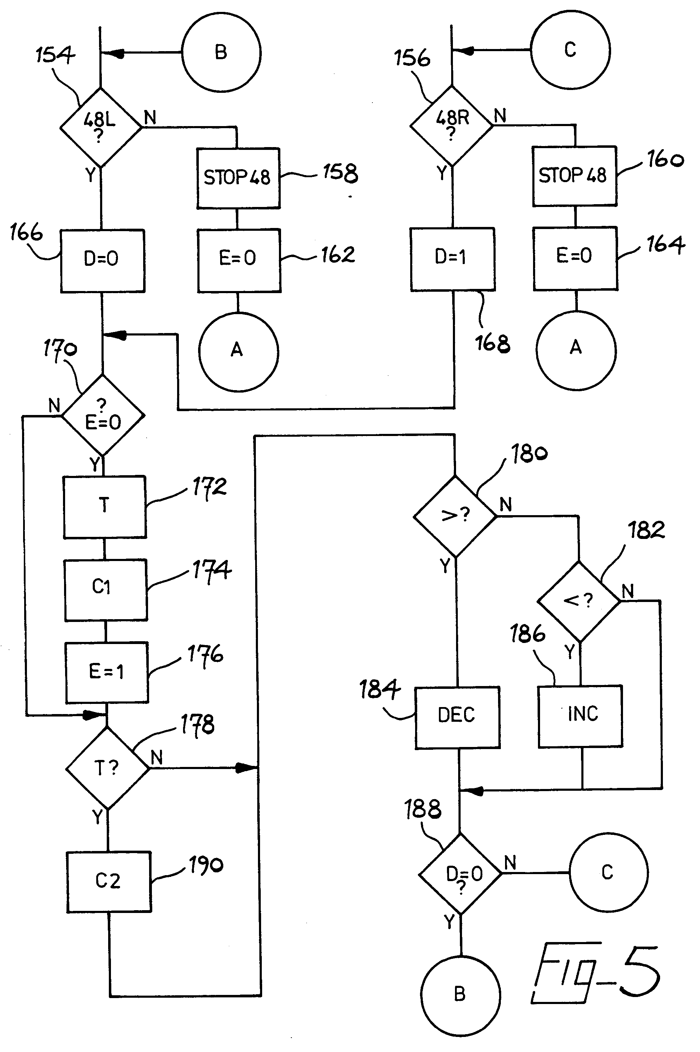

The manner in which the electronic control means controls the turning moment of the beam is illustrated in Figure 5, it being understood that the sequence of steps shown in Figure 5 is executed each time operation of the motor 48 is initiated by actuation of one of the switches 54L, 54R. Thus, at steps 154, 156 the question is posed as to whether motor operation is signalled, to drive the beam respectively to the left or right; in the event that the signal has been discontinued, the operation of the motor is also discontinued (steps 158; 160), flag E is set to value zero (steps 162; 164) and the circuit then returns via junction A to step 104. In the event that the motor operation signal is continued then the value of flag D is set respectively to zero or 1 according to whether the movement is to the left or to the right (steps 166; 168). The status of flag D is associated with the direction of movement of the beam, while the status of flay E relates to whether the motor is operating under "motor start" conditions or "continued operation" conditions.

The "motor start" period (indicated by E equals zero) is the period during which a higher current is to be applied to the motor 48 in order to overcome the inertia of the stationary beam as referred to above and the length of said period is determined by a timer T. Thus, at step 170 the value of flag E is interrogated and, in the event it equals zero, operation of timer T is initiated (step 172) and a pre-set current C1 is supplied to the motor (step 174). The current C1 and the period controlled by the timer T will be sufficient to overcome the inertia of the system and movement of the swing beam to be initiated. At step 176 the value of flag E is set to value one. At step 178 the status of the timer T is interrogated and, if it has not timed out, the level of actual current is compared with the pre-set value C1 (steps 180 and 182), the specific questions of whether the current is greater or less than the preset value being posed and in response to a "yes" answer to either of these, the current supply being varied down or up accordingly (steps 184, 186). Depending upon whether the motor is moving the beam to the left or the right, the circuit thereafter is returned (at step 188) via junction B or junction C to step 154 or step 156. The same sequence is again followed, but steps 172, 174 are by-passed by reason of the value of flag E, until the timer times out (step 178) whereupon a new, lower pre-set value C2 for the current supply to the motor 48 is selected (step 190) and the circuit then continues to monitor the actual current supplied against the pre-set value (steps 180 to 188) as described above. The current C2 is sufficient to overcome the friction in the system, and thus to enable the movement of the swing beam to be continued. This sequence then continues until the actuated one of the switches 54L, 54R is released, and the "drive" signal discontinued, as already mentioned above with reference to steps 158 to 164.

A similar circuit controls the operation of the motor 48 in response to actuation of one of the buttons 58 but in this case a second timer is provided which controls the duration of drive, whether or not the actuated button remains actuated.

For comparing the actual current supply with the pre-set value a voltage comparison is simply made, serving to regulate the current supplied according to the results of the comparison. The timer T is of the fail-safe type so that, in the event of failure, a "yes" answer is given at step 178 and the pre-set value is thus automatically switched from the higher value C1 to the lower value C2.

It will thus be appreciated that, using the press described above, it is possible to control the turning moment of the swing beam such that engagement of the beam with any obstruction, e.g. the hand of an operator or third party will not only not be injurious in terms of impact, but further the risk of injurious trapping is mitigated if not eliminated. Where such conditions prevail, clearly the need for additional guards, especially for preventing access to the operating locality by a third party, may be dispensed with.

Whereas the foregoing description with reference to Figure 4 relates to a two-hand trip arrangement the invention in accordance with its broader aspects is also applicable to a single-hand trip and indeed provision is preferably made for selecting between two-hand and single-hand trip modes. Single-hand trip arrangements are typically used where the cutting stroke does not exceed 8 mms. It will be appreciated that additional protection will be afforded by the wrapping-round of the lower edge of each pad 62, 64 when the single-hand trip mode is selected. Where a single-hand trip mode is selected the switches 54L, 54R serve a dual function, namely of causing swinging movement of the beam to be effected or a cutting stroke. To this end the circuitry illustrated in Figure 4 is modified such that following a previous cutting stroke an initial actuation of either switch 54L, 54R effects swinging movement as described above; moreover if, after release of the actuated one of said switches that switch is re-actuated or either of the two other switches is actuated within a time period of half a second, a cutting stroke will be effected. Once the time period has been exceeded, on the other hand, further actuation of either one of the switches 54L, 54R will cause further swinging movement of the beam to be effected. It will be appreciated that in the single-hand trip mode actuation of the switch 54C at any time will cause a cutting stroke to be effected.

In another embodiment of the invention otherwise similar to that described above each sensor pad arrangement may be provided with a second switching circuit in the region where the button 58 is located in the above-described press, and the buttons 58, as separate actuator elements, can then be dispensed with, actuation of either one of such second switching circuits being effective to cause swinging movement of the beam to take place, or a cutting stroke to be effected if one of the switches 54 is simultaneously actuated, in the same manner as when using the button 58 in the above-described press.

## Claims

1. Cutting press comprising

a cutting bed (12),

a cutting head (38) movable between an operative position, in which it is in opposed relationship with the cutting bed, and an out-of-the-way position,

first drive means (42 to 48) for effecting movement of the cutting head (38) between its operative and out-of-the-way positions, and

second drive means (18, 20) for effecting relative movement of approach between the cutting bed (12) and cutting head (38), thus to effect a cutting stroke of the press, and

characterised by electronic control means for monitoring the force with which the cutting head (38) moves under the action of the first drive means (42 to 48) and for limiting such force to a pre-set value whereby said value is not exceeded even in the event that continued movement of the cutting head (38) is prevented.

2. Cutting press according to Claim 1 characterised in that the first drive means comprises an electric motor drive arrangement the force applied by which to the cutting head (38) is proportional to the current supplied to it,

and in that the electronic control means monitors the current supplied to said motor and limits is in accordance with said pre-set value(s).

3. Cutting press according to Claim 1 or Claim 2 characterised in that brake means is provided effective to discontinue movement of the cutting head (38) in that sensor means (60) is provided on each side for sensing contact therewith and for causing the brake means to be applied in response to such contact being sensed, and in that a contact surface of said sensor means (60) is spaced from the side of the cutting head (38) by such a distance and the pre-set value to which the applied force is limited by the electronic control means is such that the force applied by the cutting head (38) after said distance has been traversed, to an obstruction which is placed in its path and contact with which has been sensed as aforesaid does not exceed 50 Newtons.

4. Cutting press according to Claim 3 characterised in that the sensor means (60) is also effective, upon contact being sensed as aforesaid, to disable the second drive means (18, 20) and thus prevent a cutting stroke of the press from being effected.

5. Cutting press according to any one of the preceding Claims characterised in that in the operation of the first drive means (42 to 48) initially, for a period not exceeding 0.5 seconds, relatively high power is applied, limited in accordance with an initial pre-set value for the force applied to the cutting head (38), whereby to initiate its movement, and thereafter the applied power is reduced, limited in accordance with the first-mentioned pre-set value for said force.

6. Cutting press according to any one of the preceding claims characterised in that an operator-actuatable switch arrangement (52, 58) for operating the first drive means (42 to 48) to cause movement of the cutting head (38) swing beam to take place selectively in one or an opposite direction, said arrangement (52,58) comprising a plurality of switches (54) mounted in a handle (56) on the cutting head (38) so as to be accessible to the thumb or a finger of a hand gripping the handle, operation of one of which switches (54) causes movement of the cutting head (38) to take place in one direction and operation of another of which switches causes such movement to take place in the opposite direction,

and further characterised in that said plurality of switches (54) also form part of an operator-actuatable two-hand trip arrangement (52, 58) for controlling the operation of the second drive means (18, 20), which arrangement (52, 58) also comprises at least one further button (58) actuation of which at the same time as actuation of any one of said plurality of switches (54) is effective to initiate a cutting stroke of the press.

7.  Cutting press according to any one of Claims 1 to 5 characterised by an operator-actuatable switch arrangement (52, 58) for operating the first drive means (42 to 48) to cause movement of the cutting head (38) to take place selectively in one or an opposite direction said arrangement (52, 58) comprising a plurality of switches (54) mounted in a handle (56) on the cutting head (38) so as to be accessible to the thumb or a finger of a hand gripping the handle, operation of one of which switches (54) causes movement of the cutting head (38) to take place in one direction and operation of another of which switches (54) causes such swinging movement to take place in the opposite direction, and further characterised in that said plurality of switches (54) also constitutes a single-hand trip arrangement for controlling the operation of the second drive means (18, 20), and in that if, after actuation of one of said switches (54) further actuation of the same or another switch (54) is effected within a pre-set time period, further movement of the cutting head (38) is then effected, but if such further actuation is effected outside said pre-set time period operation of the second drive means (18, 20) is effected to initiate a cutting stroke of the press.

8.  Cutting press according to Claim 7 characterised in that two such further buttons (58) are provided, one at each side of the cutting head (38) each such further button (58) being also effective, when operated alone, to cause movement of the cutting head (38) to take place, in one direction in response to actuation of one of said further buttons (58) and in the opposite direction in response to actuation of the other (58).

9.  Cutting press according to any one of the preceeding claims characterised in that the cutting head (38) is constituted by a swing beam mounted for swinging movement on a column (16) fixed to the cutting bed (12), the second drive means (18, 20) comprising a piston-and-cylinder arrangement incorporated in said column (16) and having an upwardly projecting piston rod (24) to an upper end of which is secured a first gear (44) forming part of the first drive means (42 to 48), and in that the first drive means (42, to 48) comprises a motor (48) mounted on the swing beam (38) and driving a second gear (46) held in mesh with said first gear (44) whereby operation of said motor (48) is effective to cause the second gear (46) to move around the circumference of the first gear (44) and thus to cause swinging movement of the swing beam (38) to take place about the column (16).

10.  Cutting press according to any one of the preceding claims characterised in that the first drive means (42 to 48) comprises a d.c. electric motor (48).

Fig. 1

Fig. 2

Fig_3

102 → [D = 0
E = 0]

A →

104 → 58L ?
N
Y

106 → 58R ?
N
Y

110 → 48R

108 → 48L

112 → STOP 48

A

$Fig\text{-}4A$

FIG_4B

FIG. 4C

Fig-5

EP 0 492 891 A1

## EUROPEAN SEARCH REPORT

**European Patent Office**

Application Number

EP    91 31 1499

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | DE-A-2 052 369 (LISCHER)<br><br>* page 6, line 1 – page 12, line 22; figures 1-6 *<br>--- | 1-4,6-8, 10 | B26D7/24<br>F16P3/16<br>B23Q11/04<br>C14B5/00 |
| Y | DE-A-3 816 439 (SCHULZE)<br><br>* page 1; figure 1 *<br>--- | 1-4,6-8, 10 | |
| A | EP-A-0 012 383 (NICOLAISEN)<br><br>----- | | |
| | | | **TECHNICAL FIELDS SEARCHED (Int. Cl.5 )**<br><br>B26D<br>F16P<br>B23Q<br>C14B<br>B30B<br>H01H |

The present search report has been drawn up for all claims

| Place of search | Date of completion of the search | Examiner |
|---|---|---|
| THE HAGUE | 16 APRIL 1992 | BERGHMANS H. F. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)

16